**Europäisches Patentamt**

(19) **European Patent Office**

**Office européen des brevets**

(11) Numéro de publication: **0 163 568**

**B1**

(12) # FASCICULE DE BREVET EUROPÉEN

(45) Date de publication du fascicule du brevet:
**27.04.88**

(51) Int. Cl.⁴: **B 23 P 19/04** // **B23P21/00**

(21) Numéro de dépôt: **85400918.0**

(22) Date de dépôt: **10.05.85**

(54) **Dispositif de mise en place de ressorts en épingle à cheveux sur des plaquettes, notamment pour grilles d'assemblage de combustible.**

(30) Priorité: **10.05.84 FR 8407220**

(43) Date de publication de la demande:
**04.12.85 Bulletin 85/49**

(45) Mention de la délivrance du brevet:
**27.04.88 Bulletin 88/17**

(84) Etats contractants désignés:
**BE DE FR GB IT SE**

(56) Documents cité:
**EP-A-0 022 419**
**EP-A-0 043 208**
**EP-A-0 108 673**
**FR-A-2 474 229**
**FR-A-2 526 699**
**US-A-2 629 296**
**US-A-3 781 967**

(73) Titulaire: **SOCIETE COGEMA, FRAMATOME et URANIUM PECHINEY, 2, rue Paul Dautier, F-78140 Velizy Villacoublay (FR)**

(72) Inventeur: **Vere, Bernard, 2, Les Chusets Brie et Angonnes, F-38320 Eybens (FR)**
Inventeur: **Mathevon, Paul, Avenue Achille Maucuer, F-84500 Bollene (FR)**

(74) Mandataire: **Fort, Jacques, CABINET PLASSERAUD 84, rue d'Amsterdam, F-75009 Paris (FR)**

## Description

L'invention concerne la mise en place de ressorts en épingle à cheveux destinés à supporter les crayons de combustible dans des grilles entretoises d assemblage de combustible.

Des assemblages combustibles très fréquemment utilisés comportent un faisceau de crayons de combustible (constitués chacun par un empilement de pastilles dans une gaine étanche) maintenus dans une structure. Cette dernière comporte des grilles réparties le long de l'assemblage et constituées par des plaquettes disposées suivant deux directions orthogonales, pour définir des cellules dont la majeure partie au moins est traversée par des crayons. Chacune de ces cellules est munie de moyens s'appuyant sur le crayon qui traverse la cellule pour le supporter.

Ces moyens peuvent être constitués par une partie découpée des plaquettes, constituant des pattes en appui contre les crayons. Mais il est plus avantageux d'utiliser des ressorts rapportés sur les plaquettes, pouvant être en un matériau différent des plaquettes. Une grille de ce dernier type est décrite par exemple dans le document FR-A-2 474 229 auquel on pourra se reporter.

Les ressorts ont en général une forme en épingle à cheveux, à deux branches. En général, on est amené à prévoir dans une même grille plusieurs types de ressort, du fait que la grille présente des bords et que souvent certaines cellules sont occupées par des éléments autres que des crayons, par exemple par des tubes guides. L'un des types comportera fréquemment deux branches identiques, tandis qu'un autre type aura des branches différentes. Ces ressorts sont d'abord insérés, puis solidarisés définitivement des pliquettes par soudage des deux branches l'une sur l'autre en des points bien définis, entre lesquels se trouvent des fenêtres ménagées dans la plaquette de grille.

La mise en place de chaque ressort constitue une opération délicate il est nécessaire de les localiser de façon précise afin de ne pas les pincer sur les plaquettes lors de l'opération de soudage, et d'éviter toute contamination. Jusqu'ici, le montage des ressorts et leur soudage ont été réalisés de façon manuelle, ce qui constitue une opération longue et pénible, susceptible au surplus de donner lieu à des erreurs lorsque des ressorts de types différents doivent être placés en des zones bien déterminées de la plaquette. On peut penser que l'une des raisons pour lesquelles il n'y a pas eu automatisation de ce processus réside dans les risques d'accrochage des branches du ressort aux nombreuses aspérités de la plaquette lors de l'insertion d'un ressort dont les branches présentent un écartement qui ne peut être exactement défini du fait de leur élasticité.

La demande de brevet FR-A-2 535 101 de la demanderesse décrit par ailleurs un procédé et un dispositif de mise en place de ressorts en épingle à cheveux et de soudage. Lors de la mise en oeuvre du procédé, la plaquette est déplacée pas à pas pour amener successivement toutes les zones de la plaquette à munir de ressorts en un emplacement d'insertion où un ressort est glissé en place par déplacement suivant une orientation proche du plan de la plaquette, dans une direction perpendiculaire à la longueur de la plaquette. Pour éviter l'accrochage des ressorts dans les fenêtres, ces dernières doivent être recouvertes d un masque pendant l'insertion. Le masque est ensuite retiré pour permettre le soudage par points des branches du ressort au travers des fenêtres.

Si ce procédé a l'avantage d'être facilement automatisable, il a l'inconvénient d'être relativement lent, du fait du temps nécessaire à la mise en place, puis au retrait des masques. Et dans la pratique il n'est pas possible de se dispenser des masques, car l'introduction des ressorts dans une plaquette placée horizontalement provoque des risques importants d accrochage des ressorts dans les fenêtres.

L'invention vise à fournir un dispositif de mise en place de ressorts répondant mieux que ceux antérieurement connus aux exigences de la pratique, notamment en ce qu'il permet une mise en place particulièrement rapide et sûre des ressorts.

Dans ce but, l'invention propose notamment un dispositif d'insertion de ressorts en épingle à cheveux à deux branches à cheval sur une plaquette munie de fenêtres permettant de souder localement les branches l'une contre l'autre, comportant des moyens pour recevoir une plaquette à la fois en position verticale, pour la déplacer dans le sens de la longueur, pour l'amener dans des positions successives correspondant chacune à la venue d'une des zones de réception de ressort à un emplacement d'insertion, des moyens de centrage et de maintien temporaire de la plaquette dans lesdites positions successives ; des moyens de guidage des ressorts vers un emplacement de prise caractérisé en ce qu'il comporte une pince prévue pour saiair chaque ressort à non tour par l'extrémité d'une de ses branches, associée à des moyens de déplacement de la pince dans un plan perpendiculaire à la plaquette suivant un trajet d'introduction de l'autre branche du ressort dans la plaquette.

Le dispositif comporte avantageusement des moyens, de soudage électrique par pince agissant sur le ressort alors que la zone de réception correspondante est à l'emplacement d'insertion. Lorsqu' on recherche une cadence de fonctionnement élevée, ces moyens de soudage par pince sont prévus pour ne solidariser les branches du ressort qu'à traversune seule des deux fenêtres qui sont generalement prévues. Les moyens pour déplacer la plaquette dans le sens de la longueur sont alors associés à un poste de soudage supplémentaire, destiné à souder l'une à l'autre les deux branches de la plaquette à travers la seconde fenêtre.

L'invention sera mieux comprise à la lecture de la description qui suit de dispositifs qui en constituent des modes particuliers de réalisation, donnés à titre d'exemples non limitatifs. La description se réfère aux dessins qui l'accompagnent, dans lesquels :

- la Figure 1 est une vue en perspective d'un fragment d'une grille d'assemblage combustible dont les ressorts peuvent être insérés par un dispositif suivant l'invention.

- la Figure 2 est une vue de détail montrant, en élévation, un fragment d'une plaquette de la grille de la Figure 1, munie des ouvertures et des déformations nécessaires pour recevoir les ressorts,

- les Figures 3A et 3B sont des vues, respectivement en coupe suivant les lignes AA et BB de la Figure 2, montrant respectivement un ressort double (à deux branches actives) et un ressort simple (dont une branche constitue ressort et l'autre constitue butée).

- la Figure 4 est un schéma de principe, en vue de dessus, montrant la répartition des postes de travail d'un dispositif de montage de ressort selon un mode d'exécution de l'invention,

- la Figure 5 est une vue à grande échelle de la fraction de la Figure 4 contenue dans le cercle V,

- les Figures 6A et 6B sont des vues à grande échelle, en élévation, montrant les parties gauche et droite des moyens de centrage et de maintien de plaquette à l'emplacement d'insertion, suivant la ligne VI-VI de la Figure 4,

- la Figure 7 est une vue à grande échelle, en élévation, suivant la ligne VII-VII de la Figure 4, montrant la pince d'insertion des ressorts et les éléments qui lui sont directement associés, dans les positions successives occupées lors de l'insertion d'un ressort double,

- la Figure 8, similaire à une fraction de la Figure 7, montre les déplacements qui interviennent en cas d'insertion de ressorts simples,

- la Figure 9 est un schéma de principe, en élévation, montrant des moyens élastique de maintien en butée d'une plaquette dans un module,

- la Figure 10 est un schéma de principe montrant comment s'effectue l'opération de centrage d'un ressort par rapport à la fenêtre de soudage inférieure dans un mode particulier d'exécution de l'invention,

- la Figure 11 est une vue en élévation, depuis la gauche de la Figure 4, montrant une constitution possible du poste de bridage de l'installation suivant l'invention,

- la Figure 12 est une vue en élévation et en coupe suivant la ligne XII-XII de la Figure 11.

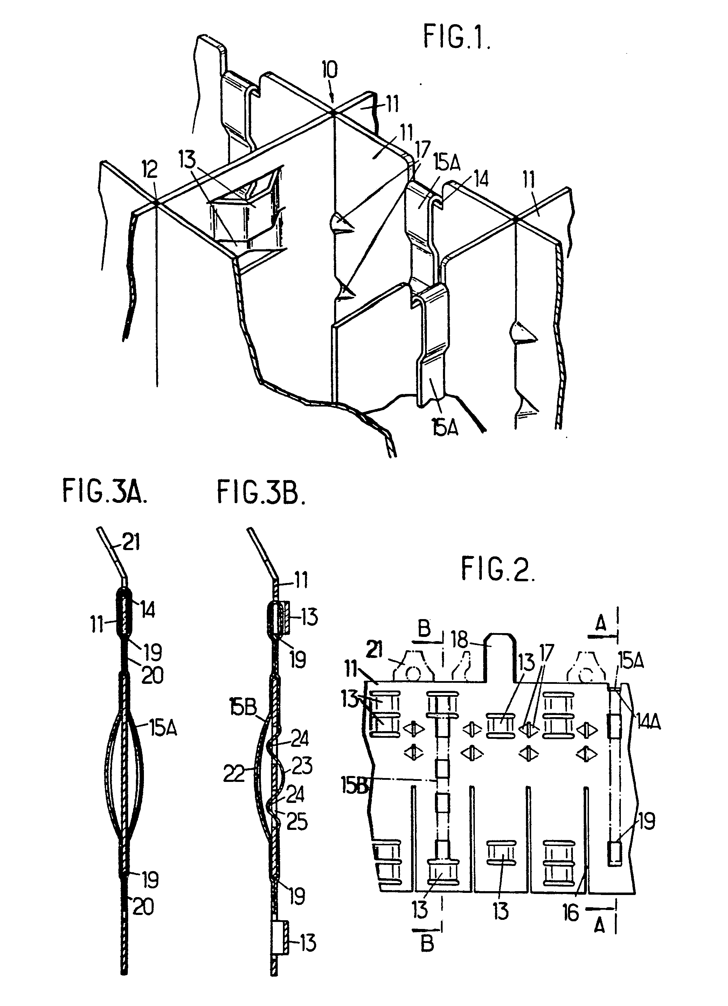

Les dispositifs qui seront décrits à titre d'exemples peuvent être utilisés notamment pour monter les ressorts montrés en Figures 3A et 3B sur les plaquettes d'une grille du genre montré en Figure 1. Cette grille 10 est constituée par des plaquettes 11, généralement en alliage à base de zirconium dénommé "zircaloy", assemblées à mi-fer et soudées en leurs points de raccordement 12.

Chacune des plaquettes 11 comporte des bossages 13 d'appui de crayons de combustible (non représentés) et diverses ouvertures coopérant avec les ressorts destinés à appliquer les crayons sur les bossages. Sur la Figure 1 apparaissent uniquement des ressorts doubles 15A qui s'insèrent dans des échancrures 14 des plaquettes débouchant sur l'une des tranches.

Sur la plaquette 11 représentée schématiquement en Figure 2 ont été indiqués, de façon artificielle, différents types d ouvertures et de déformations que l'on rencontre dans une grille 10. On voit sur cette figure les fentes 16 destinées à permettre l'assemblage à mi-fer, placées face à des intervalles de guidage délimités par des ergots 17. Une bande médiane verticale de la plaquette 11 qui porte deux bossages 13 dirigés d'un même côté est équipée d'une languette 10 de fixation de la grille sur un tube guide (non représenté) appartenant à l'ossature de l'assemblage. A gauche de cette bande en est montrée une autre, munie de bossages 13 faisant saillie des deux côtés de la plaquette, comme indiqué sur un des côtés de la cellule complète visible en Figure 1. Une bande identique a été représentée immédiatement à droite de celle qui porte une languette de fixation 10. Enfin, la dernière bande à droite est munie d'une échancrure 14 destinée à recevoir un ressort double 15A. Les ailettes 21 indiquées en traits mixtes et apparaissant sur un des bords de la plaquette sont prévues uniquement sur certaines des plaquettes.

Comme le montre la Figure 3A, chacun des ressorts 15A peut être mis en place en glissant ses branches de part et d autre de la plaquette 11 jusqu'à ce que la boucle supérieure du ressort vienne au contact de la plaquette, au fond de l'échancrure 14. Des fenêtres 19 ménagées dans la plaquette (Figures 2 et 3A) permettent, de fixer les deux branches de ressort directement l'une sur l'autre à l'aide d'un point de soudure 20.

Le ressort simple 15B montré en Figure 3B est de constitution dissymétrique. Sa branche 22 est similaire aux branches du ressort 15A. L'autre branche 23 est dessinée de façon à constituer une rotule délimitée par deux plis 24 susceptibles de venir en contact avec la branche 22 à travers des ouvertures 25 de la plaquette, pour éviter de transmettre les efforts de compression de celle-ci. Comme dans le cas précédent, les deux branches du ressort 15B sont soudées l'une à l'autre à travers des fenêtres 19 sur la grille terminée. Mais la boucle ne vient pas se placer au fond de l'échancrure, mais dans un prolongement de la fenêtre supérieure 19, ménagée par un des bossages 13. Il n'est donc pas possible de passer directement les branches 22 et 23 de part et d'autre de la plaquette.

Cette suppression de l'échancrure, gênante pour ce qui est de l'insertion du ressort, est fréquemment indispensable car l'échancrure affaiblirait de façon excessive la plaquette à un emplacement où elle présente déjà des bossages 13 qui ont un rôle important dans le supportage, mais une action défavorable sur la résistance de la plaquette.

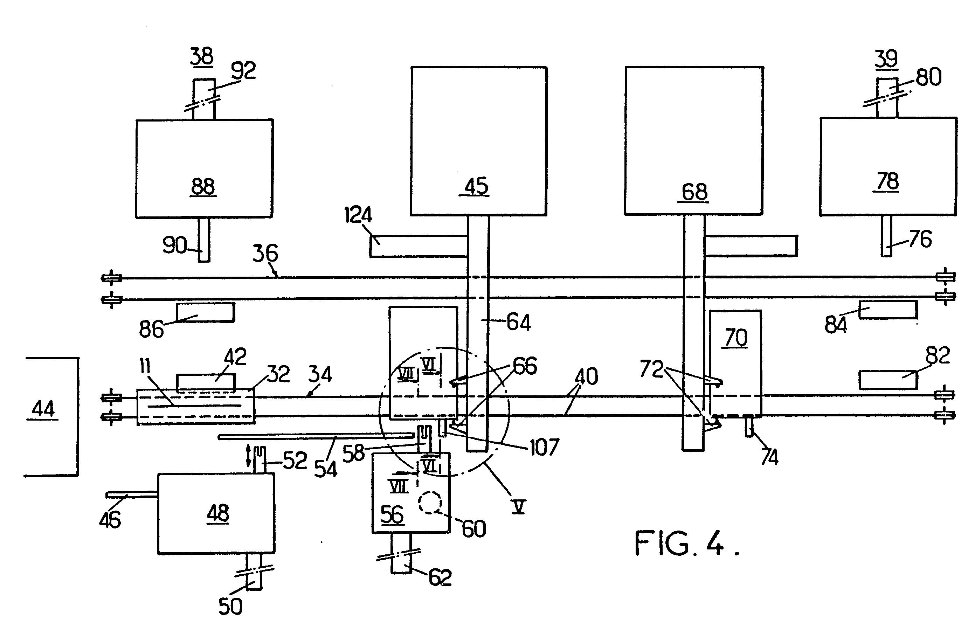

Le dispositif de montage et de soudage dont le schéma d'ensemble est montré en Figure 4 peut être regardé comme constitué de plusieurs postes fixes de travail, assurant des opérations successives, et un mécanisme de transport des plaquettes à équiper et de présentation des plaquettes aux postes successifs.

Le mécanisme de transport est prévu pour transporter les plaquettes 11 sur des modules individuels 32 qui les retiennent en position verticale. Ce mécanisme comporte une voie d'alimentation 34, une voie de retour 36 parallèle à la précédente et deux mécanismes de transfert 38 et 39.

Chaque voie est constituée de deux courroies 40 soutenues par des poulies folles et des poulies motrices entraînées par un moteur électrique pas à pas non représenté.

Le mécanisme de transfert de modules 38 comporte un mécanisme élévateur-abaisseur 42 encadrant la partie initiale de la voie 34 et permettant de soulever un module au-dessus de la voie ou, au contraire, de le déposer sur la voie.

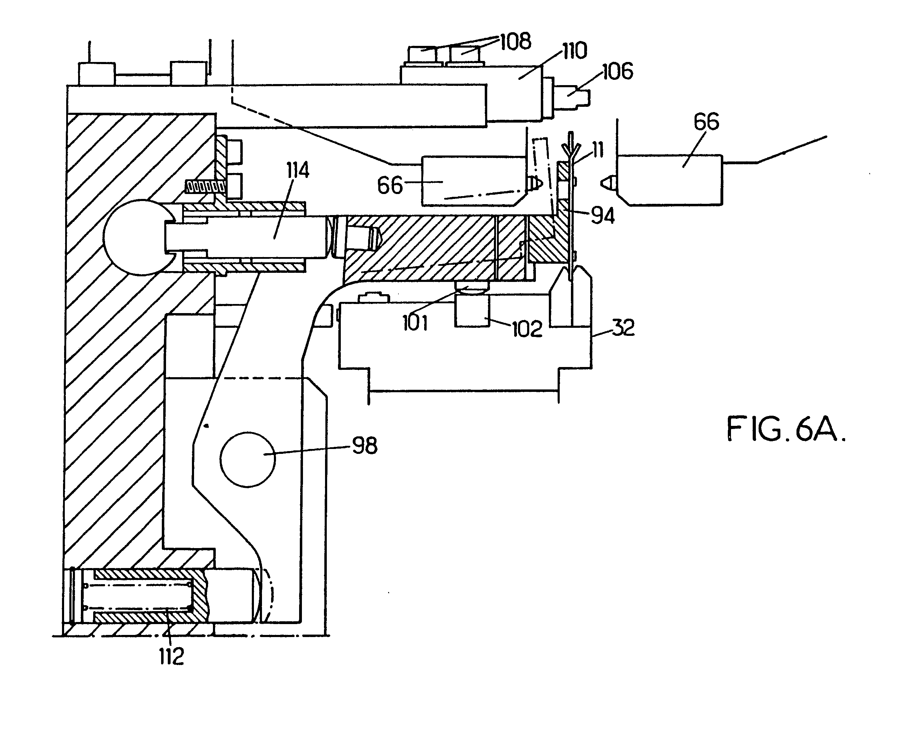

Chaque module 32 (Figure 6A) comporte une fente de réception de la partie basse d'une plaquette 11 et des pions escamotables répartis au même pas que les zones de réception des ressorts, au nombre de dix-sept par exemple. Avant mise en place d'un module à partir d'un poste de manutention 44, l'opérateur met en saillie ceux des pions qui correspondent aux zones à équiper d'un ressort de type déterminé.

Le premier poste de travail placé sur la voie d'alimentation 34 est constitué par un poste de centrage et de maintien de plaquettes entre des mâchoires de bridage, poste associé à une machine de soudage 45 et à un ensemble d'amenée et d'insertion de ressorts. L'ensemble d'amenée de ressorts comporte un magasin à ressorts 46 destiné à recevoir des barrettes de ressort, une cisaille 40 qui découpe les ressorts et une pince 52 actionnée par un vérin 50 qui les amène un à un sur un rail vibrant 24 de guidage des ressorts vers un emplacement de prise. Il comporte de plus un manipulateur 56 ayant une pince 50 destinée à saisir chaque ressort 15A ou 15B à son tour et à le placer sur la plaquette 11 pendant que cette dernière est immobilisée pour que la zone à équiper soit dans une position fixe et bien déterminée d'insertion. La pince de manipulation 58 est déplaçable verticalement par un vérin 60 et horizontalement, transversalement au plan de la plaquette 11, par un vérin 62.

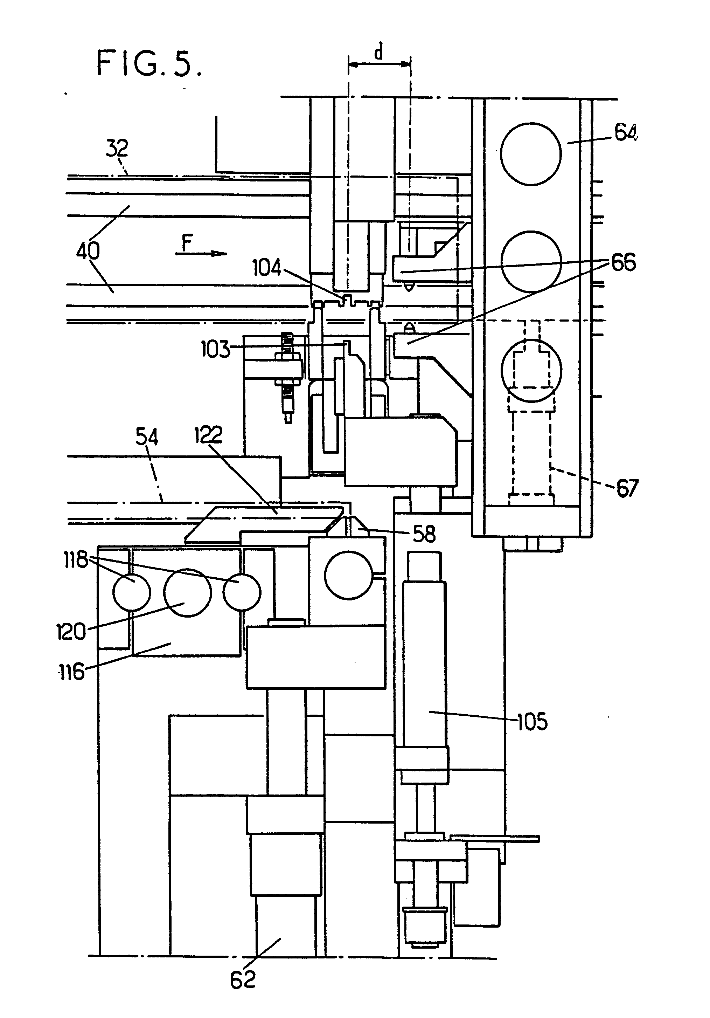

La machine de soudage 45 peut être du type à pinces de soudage électrique par points décrite dans la demande de brevet FR-A-2 535 101. La Figure 4 montre de même la poutre 64 portant des mors de soudage 66 écartables et rapprochables. Un vérin 67 (Figure 5) permet de rapprocher les mors pour serrer l'une contre l'autre les branches d'un ressort et pour les dégager.

La machine de soudage 42 est prévue pour n'effectuer que la soudure supérieure de fixation de chaque ressort 15A ou 15B. Ainsi, la cadence d'équipement d'une plaquette n'est pas retardée par le temps nécessaire à deux opérations de soudage successives. Une seconde machine de soudage 68, similaire à la première, également associée à un poste 70 de bridage temporaire du module, est placée en aval de la première sur la voie d'alimentation 34. Un vérin de la machine de soudage 68 permet de serrer l'une contre l'autre, a travers la fenêtre inférieure 19, les branches du ressort situé en un emplacement de soudage entre les mors de soudage électrique 72. Un vérin 74 est prévu pour indexer pas à pas le module placé au poste 70.

Le mécanisme de transfert 39 placé en aval du poste 70 est destiné à faire passer chaque module 32, portant une plaquette équipée, de la voie 34 à la voie 36. Ce mécanisme de transfert comporte un ensemble de manipulation 78 muni d'une pince 76 dont les déplacements horizontaux sont commandés par un vérin 40. La pince 76 permet de saisir le module 32 sur un poste de levage et de descente 82 (poste de déjaugeage) et de le déposer sur un poste de déjaugeage similaire 84 associé à la voie de retour 36. Le poste 84 permet de poser le module 32 sur la voie 36 de retour des plaquettes équipées.

La voie de retour amène le module 32 près du poste de manutention 44 où il s'accoste sur un dispositif de déjaugeage 86 similaire aux dispositifs 82 et 84. Le dispositif 86 appartient au mécanisme de transfert 38 comportant un ensemble de manipulation 88 similaire à l'ensemble 78 et possédant également une pince 90 et un vérin 92. La pince 90 permet de déplacer horizontalement le module 32 et de le positionner sur le mécanisme 42, après libération de celui-ci par un module 32 équipé d'une plaquette vierge.

L'opérateur glacé au poste de manutention 44 peut alors saisir la plaquette complètement équipée amenée par le module 32, extraire ette plaquette et la remplacer par une plaquette à équiper.

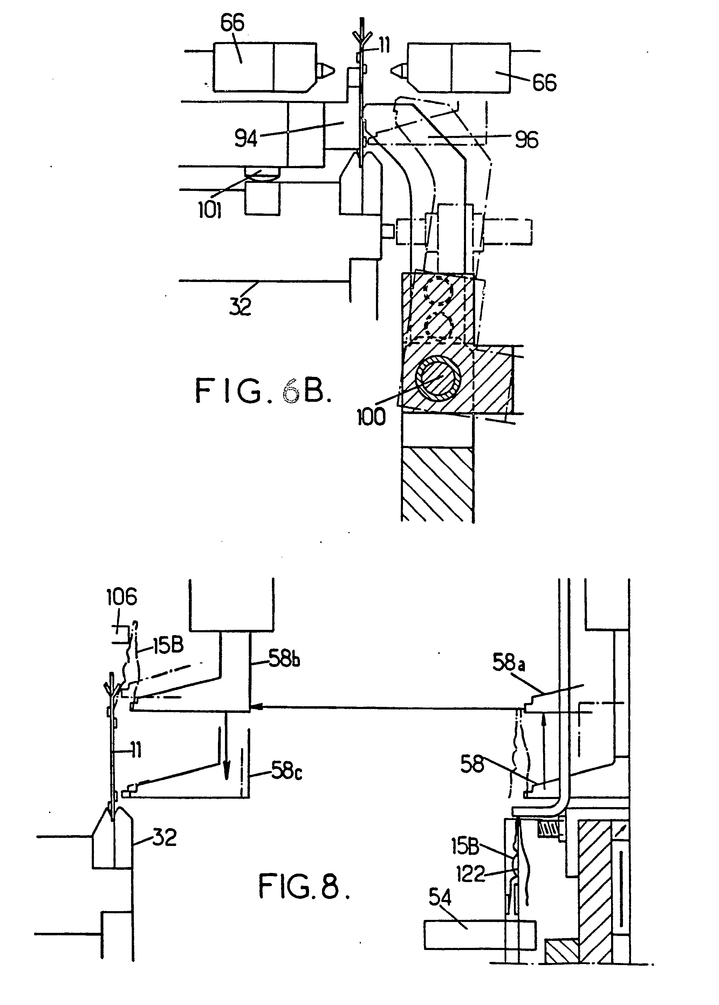

Le poste de centrage et de bridage sera maintenant décrit en détail en faisant référence aux Figures 5, 6A et 6B. Ce poste comporte un châssis fixe sur lequel une mâchoire gauche 94 (figure 6A) et une mâchoire droite 96 (figure 6B) sont montées par l'intermédiaire d'axes de basculement respectifs 98 et 100 parallèles à la direction F de déplacement du module 35 sur la voie 34. Les mâchoires sont représentées en traits mixtes dans leur position de retrait, permettant le déplacement du module 35, et en traits pleins en position de bridage. Le châssis porte un capteur (non représenté) de détection de l'arrivée d'un pion en saillie sur le module 32 à l'emplacement de l'insertion de ressort.

La mâchoire 94 est munie d'un pion 101 de blocage du module 32 lorsque la mâchoire est fermée. Ce pion coopère avec une barrette 102 ménagée dans le module 32 afin de présenter une surface durcle interchangeable.

Le dispositif de centrage de la plaquette 11 à l'emplacement d'insertion comporte un doigt de centrage 103 qu'un mécanisme de va-et-vient 105 permet de déplacer sur le châssis entre une position rétractée, où il est montré en Figure 5, et une position avancée, où le pion s'engage dans un logement 104 situé en face, à travers une fenêtre de la plaquette. L'indexage pas à pas du module après chaque montage d'un ressort est commandé par un vérin 107.

La Figure 6A montre une cale 106 portée par une bride 110 fixée au châssis par des vis 108. La bride n'est placée que pour l'équipement d'une plaquette en ressorts dissymétriques 15B. La cale 106 quelle porte, située au droit de l'emplacement de la plaquette 11 à équiper, guide les ressorts lors de leur insertion, comme on le verra plus loin. En effet, la cale donne à la branche des ressorts 15B une orientation leur permettant de 5 introduire dans les ouvertures situées audessous des bossettes 13. La bride 110 est enlevée lors de la mise en place des ressorts 15A qui se positionnent à cheval dans les échancrures 14 de la plaquette 11.

Les mâchoires 94 et 96 sont munies de ressorts de rappel en position d'ouverture (112 sur la Figure 6A). Leur fermeture est commandée par des poussoirs respectifs actionnés par vérin et came (114 sur la Figure 6A).

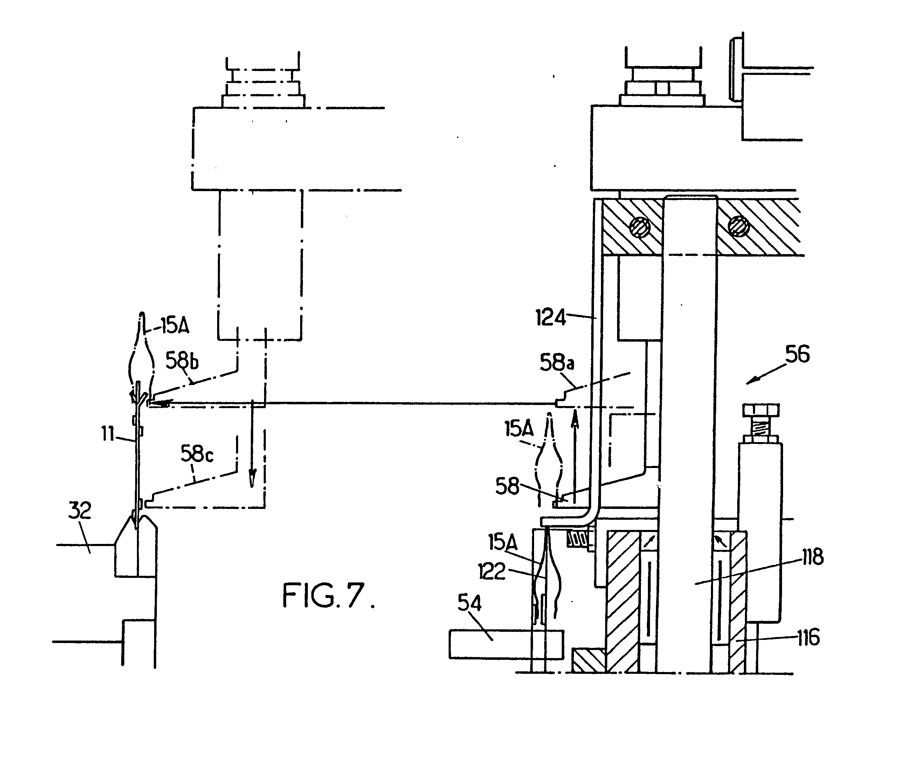

Les constituants principaux du manipulateur 56 d'amenée et d'insertion des ressorts apparaissent sur la Figure 7, ou le ressort représenté est un ressort double 15A. Ces constituants comportent un chariot 116 qui coulisse sur des colonnes verticales 118 sous l'action d'un vérin 120 (Figure 5). Le chariot 116 porte un séparateur 122 qui permet de soulever verticalement un ressort à la fois depuis le rail vibrant de guidage 54 jusqu'à un niveau de reprise par la pince 28. Un cache fixe 124 évite de soulever deux ressorts à la fois,

Le vérin 60 permet de déplacer la pince 28 de la position basse, où elle est représentée en traits pleins sur la Figure 7 et peut saisir un ressort, à la position haute indiquée en 58a. Dans cette position de la pince, le ressort 12A se trouve à un niveau juste supérieur à celui de la plaquette 11. Le vérin 62 permet de déplacer ensuite la pince horizontalement pour l'amener à la position 58b. Le ressort 15A se trouve alors juste au-dessus de l'emplacement de la plaquette où il doit être introduit. Le vérin 60 permet de descendre la pince en 58c pour introduire le ressort.

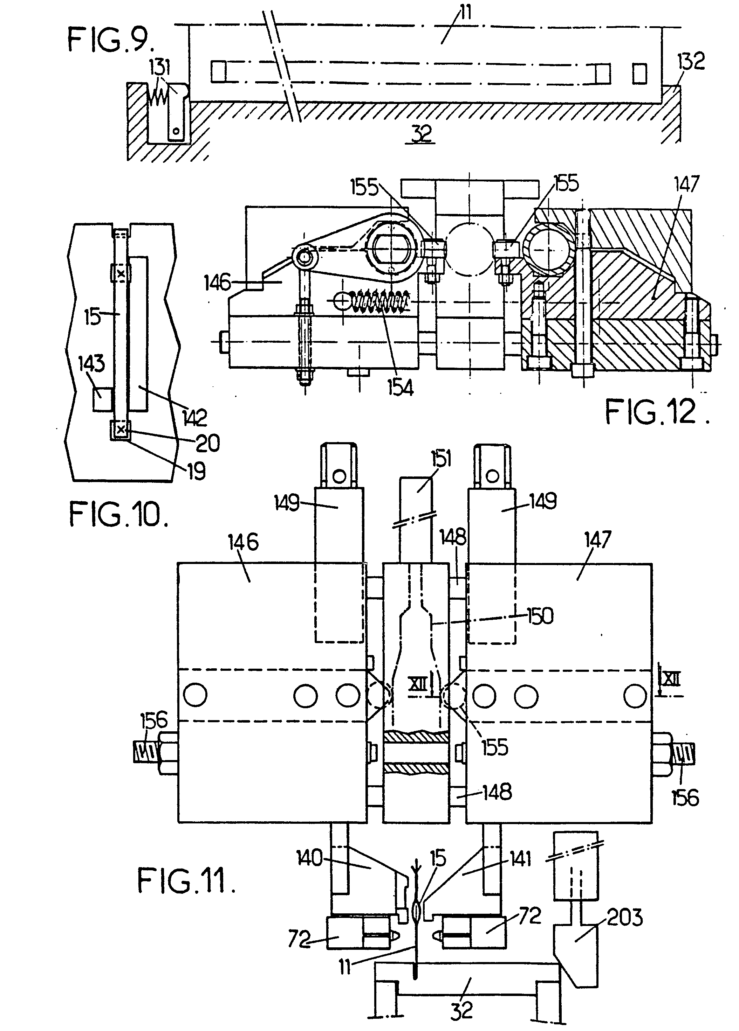

Les vérins 60 et 62 sont prévus pour que le trajet suivi par la pince soit légèrement différent du précédent dans le cas où les ressorts à insérer sont des ressorts dissymétriques 15B. La Figure 8 montre en traits pleins des positions successives 58, 58a, 58b et 58c prises par la pince, qu'on peut comparer avec celles (indiquées en traits mixtes) lors de l'insertion des ressorts 15A.

Le fonctionnement du dispositif qui vient d'être décrit ne sera que brièvement évoqué, car il ressort de la description qui précède.

L'opérateur munit tout d'abord un module 32 d'une plaquette à équiper et programme les pions en fonction des emplacements où des ressorts d'un type déterminé doivent être introduits. Une barrette de ressorts du type à insérer est placée sur le magasin 46.

Le fonctionnement intervient alors automatiquement. La cisaille 48 détache individuellement chaque ressort que la pince 52 place à cheval sur le rail vibrant de guidage 54. Le module, posé par l'opérateur sur le mécanisme 42, est abaissé par ce dernier sur la voie d'alimentation 34. Le moteur d'entraînement des courroies 40 entraîne le module jusqu' au poste de centrage et de maintien. Le pion de centrage 103 s'avance et centre exactement la plaquette. La première mâchoire articulée 94 s'applique sur la face gauche de la plaquette 11. La mâchoire 96 est, à son tour, actionnée et s'applique sur la face droite de la plaquette 11. Le doigt de centrage 103 recule. La pince 28 saisit un ressort à insérer et l'introduit. Lorsque la plaquette est à équiper de ressorts simples 128, la cale 106 a été préalablement mise en place. La pince 28 ne soulève alors le ressort que jusqu à la position correspondant à l'altitude de l'ouverture sous les bossettes 13 de la plaquette 11. L'action conjuguée de la pince 58 et de la cale 106 oriente le ressort 128 obliquement par rapport à la plaque, ce qui permet à la branche du ressort non tenue par la pince 58 de se glisser dans l'ouverture lorsque la pince descend (Figure 8).

Dès que le ressort a été mis en place, la poutre 64 de la machine de soudage est déplacée vers la gauche sur la distance d (Figure 5) par son vérin 124 (Figure 4). Les mors 66 sont rapprochés pour que les électrodes de soudage s'appliquent sur les branches et les pressent l'une contre l' autre. La pince 58 est rétractée. Les deux branches sont soudées l'une à l'autre a leur partie supérieure à travers la fenêtre 19. Les ressorts successifs sont ainsi mis en place et soudés. Après chaque soudage d'un ressort, le module 32 est avancé par le vérin 107 qui commande une tige agissant sur un chemin constitué par des dents usinées sur la face inférieure du module 32. Le fonctionnement du vérin 107, et donc l'avance du module du nombre de pas nécessaire, est commandé par un détecteur qui provoque l'arrêt du module chaque fois que se présente un pion placé en saillie sur la face latérale du module.

Une fois que toutes les premières soudures ont été effectuées sur la plaquette 11 portée par le module 32, le module est entraîné par les courroies 40 jusqu' au second poste de bridage 70. La machine de soudage 68 effectue alors un second soudage sur chaque ressort, à travers la fenêtre 19 inférieure de la plaquette, ce qui implique que les électrodes de soudage portées par les mors 72 sont à un niveau inférieur à celles de la première machine 45.

Enfin, lorsque toutes les soudures ont été exécutées, le module 32 est repris en charge par les courroies 40 et parcourt le reste de la voie d'alimentation 34, puis la voie de retour 36. Le mécanisme de transfert 38 ramène le module sur le mécanisme élévateur-abaisseur 42 où l'opérateur extrait la plaquette équipée et la remplace par une plaquette vierge.

On voit que les plaquettes sont ainsi équipées en continu, plusieurs modules pouvant simultanément se trouver sur les voies 34 et 36 en constituant une noria. La programmation à l'aide des pions des modules permet de réaliser, sur des plaquettes successives, des répartitions de ressorts différentes.

De plus, le dispositif suivant l'invention permet, grâce à la programmation autorisée par les pions des modules, de réparer une plaquette en remplaçant un ressort dont le soudage est défectueux.

On décrira maintenant, à titre de mode particulier de réalisation, une constitution possible du poste de bridage 70, permettant de prévoir, dans les modules individuels 32, des fentes de réception des plaquettes 11 ayant une longueur supérieure à la longueur de la plaquette, afin de faciliter l'insertion de ces dernières. Un excès de longueur de 0,5 mm suffit en effet pour que l'opérateur puisse glisser aisément les plaquettes dans les fentes.

La présence du jeu ainsi constitué n'est pas gênante pour exécuter la soudure haute 20 (Figure 3A) car la plaquette 11 est centrée et maintenue au poste de centrage et de bridage au cours des phases de montage de ressort et de soudage.

Mais ce jeu constitue un risque si le ressort n'est pas exactement centré par rapport à la fenêtre inférieure 19 lors de l'exécution de la soudure basse 20. Or, lors du déplacement du module 32, les branches des ressorts 15A et 15B (qu'on désignera globalement par la suite par la référence 15) peuvent tourner autour de la soudure supérieure et se décaler par rapport' à l'axe vertical de la plaquette. Dans ce cas, il y a un risque de fixation d'une section des branches sur la plaquette, de part et d'autre de celle-ci, lors de l'exécution de la soudure basse 20. Dans ce cas, la plaquette doit être mise au rebut ou réparée.

Pour écarter ce risque, le poste de bridage 70 peut être muni de moyens d'indexage de la partie basse des branches de chaque ressort par rapport à la plaquette. Les Figures 9 à 12 montrent une constitution possible de ces moyens.

La Figure 9 montre un module 32 comportant un dispositif de mise en position constitué par une butée 132 et par un poussoir à ressort 131. La force exercée par le ressort 131 peut être faible elle ne fait que compléter la mise en appui naturel de la plaquette 11 sur la butée 132 lors de l'arrêt du module 32 au poste de bridage temporaire 70. Le poussoir à ressort 131 assure également la remise en position de la plaquette après soudage.

Le poste 70 comporte une réglette de butée 203 contre laquelle vient s'appuyer le module 32 lorsqu'il est au poste 70. Sur les Figures 11 et 12, les parties fixes n'ont pas été représentées, non plus que les organes de soudage, exception faite des pinces de soudage 72.

Les moyens d'indexage comprennent deux pinces 140 et 141 ayant une constitution similaire. Chacune des pinces comprend un mors long 142 et un mors court 143 (Figure 10). Les pinces sont actionnées par un mécanisme monté sur le châssis de l'installation. Ce mécanisme comporte deux plaques 146 et 147 montées sur des glissières 148 de façon a pouvoir s'écarter et se rapprocher l'une de l'autre. Le rapprochement des glissières de façon à amener les pinces 140 et 141 qu'elles portent en contact avec la plaquette 11 est assuré par un ressort 154 (Figure 12). L'écartement des plaques est commandé par une came 150 actionnée par un vérin 151. Les plaques 146 et 147 portent des galets 125 s'appuyant sur la came. La hauteur des pinces 140 et 141 est réglable à l'aide de tiges filetées 148 (Figure 11). Leur écartement maximal est réglable à l'aide d'autres tiges filetées 126 (Figure 11).

Comme le montre la Figure 10, le mors long 142 des pinces constitue une mâchoire s'étendant sur la plus grande partie de la longueur d'un ressort 12. La face du mors 142 prévue pour venir en contact avec le ressort présente une pente par rapport à la verticale. A titre d'exemple, on peut indiquer qu'on a réalisé un dispositif dans lequel la différence d'épaisseur entre l'extrémité haute du mors 142 et l'extrémité basse est de 0,15 mm, l'extrémité basse étant la moins épaisse. Le centrage d'un ressort 12 est effectué après arrêt du module 32 et mise en butée à l'aide de la réglette 203 et avant soudage. Pour cela, le vérin 121 est mis en action pour autoriser la fermeture des pinces 140 et 141 sous l'action du ressort 154. Du fait de la variation d'épaisseur du mors 142, la fermeture de la pince repousse la boucle supérieure du ressort 15 en butée contre l'une des arêtes de la fenêtre 14. Dès cette venue en butée, la plaquette 11 est elle-même entraînée vers l'arrière et quitte sa butée. La partie basse du mors 142 coopère avec le mors court 113, chaque pince maintenant ainsi l'une des branches du ressort 15 au droit de la fenêtre 19. Les pinces de soudage 72, situées sous les pinces de centrage 140 et 141, sont alors mises en action pour réaliser la soudure basse. Dès que cette soudure est exécutée, les pinces 140 et 141 sont ouvertes par mise en action du vérin 151. Le poussoir à ressort 131 refoule alors la plaquette 11 pour l'amener dans sa position de butée.

## Revendications

1. Dispositif d'insertion de ressorts (15A, 15B) en épingle à cheveux à deux branches à cheval sur une plaquette (11) munie de fenêtres permettant de souder localement les branches l'une contre l'autre, comportant des moyens (32) pour recevoir une plaquette à la fois pour la déplacer dans le sens de la longueur, pour l'amener dans des positions successives correspondant chacune à la venue d'une des zones de réception de ressort à un emplacement d'insertion, des moyens (103, 104, 94, 96) de centrage et de maintien temporaire de la plaquette dans lesdites positions successives et des moyens (54) de guidage des ressorts vers un emplacement de prise, caractérisé en ce qu'il comporte une pince (58) prévue pour saisir chaque ressort à son tour par l'extrémité d'une de ses branches, associée à des moyens (60, 62) de déplacement de la pince dans un plan perpendiculaire à la plaquette maintenue en position verticale par les moyens de réception (32), suivant un trajet d'introduction de l'autre branche du ressort dans la plaquette.

2. Dispositif selon la revendication 1, caractérisé en ce qu'il comporte des moyens de soudage électrique par pince (66) associés auxdits moyens de centrage et d'insertion (103, 104, 94, 96) et prévus pour agir sur le ressort alors que la zone de réception correspondante est à l'emplacement d'insertion.

3. Dispositif selon la revendication 2, caractérisé en ce que lesdits moyens de soudage par pince (66) sont prévus pour ne solidariser les branches du ressort qu'à travers une seule de deux fenêtres.

4. Dispositif selon l'une quelconque des revendications 1 à 3, caractérisé en ce que les moyens pour déplacer les plaquettes comportent une voie d'alimentation (34) à courroies (40) d'entraînement de modules portant chacun une plaquette (11) et des moyens (107, 74) d'avance du module par rapport aux moyens de centrage et de maintien par pas égaux à l'intervalle entre deux zones à munir d'un ressort.

5. Dispositif selon la revendication 4, caractérisé en ce que les moyens pour déplacer les plaquettes comprennent de plus une voie de retour (36) pour ramener les modules portant les plaquettes équipées de ressorts vers un emplacement proche de leur point de départ et un mécanisme de transfert (38) pour faire passer un module à la fois de la voie de retour à une zone de départ de la voie d'alimentation (34).

6. Dispositif selon la revendication 4 ou 5, caractérisé en ce que chaque module (32) comporte une fente de réception de la partie basse d'une plaquette (11) et des pions escamotables répartis au même pas que les zones de réception des ressorts.

7. Dispositif selon l'une quelconque des revendications précédentes, caractérisé en ce que les moyens de guidage des ressorts comprennent une cisaille (48) de découpe de ressort, une pince (52) d'amenée des ressorts successifs sur un rail vibrant (54) de guidage des ressorts vers un emplacement de prise et un séparateur de soulèvement d'un ressort à la fois, placé à cheval sur le rail vibrant, jusqu'à un emplacement de prise par la pince (58) d'insertion du ressort.

8. Dispositif selon l'une quelconque des revendications précédentes, caractérisé en ce que la pince (58) d'insertion des ressorts est munie de vérins (60, 62) lui permettant de soulever un ressort (15A, 15B) à la fois jusqu'à un niveau supérieur à l'emplacement d'insertion dans la plaquette (11), puis de le déplacer horizontalement et enfin de le laisser pour l'introduire en place.

9. Dispositif selon la revendication 8, caractérisé en ce que les vérins (60, 62) et la pince (58) d'insertion sont associés à des moyens de commande donnant à la pince un trajet différent suivant que le ressort doit être inséré dans une échancrure (14) de l'arête supérieure de la plaquette ou enfilé à travers une fenêtre (19) ménagée dans la plaquette.

10. Dispositif selon la revendication 9, caractérisé en ce qu'il comporte une cale amovible (106) placée de façon à venir en butée contre la partie haute des ressorts (15B) lors de leur amenée par la pince d'insertion (58) et à leur imposer l'inclinaison nécessaire à leur introduction dans la fenêtre (19) de la plaquette.

11. Dispositif selon la revendication 1 ou 2, caractérisé en ce que les moyens pour déplacer les plaquettes sont associés à des seconds moyens de soudage (68), destinés à souder l'une à l'autre les deux branches du ressort à travers la seconde fenêtre, éventuellement associés à des moyens de centrage.

12. Dispositif selon la revendication 11, caractérisé en ce que lesdits moyens de centrage comprennent deux pinces (140, 141) déplaçables entre une position écartée et une position rapprochée dans laquelle chaque pince enserre une branche de ressort et l'oriente autour de la soudure déjà effectuée pour aligner les branches de part et d'autre de la seconde fenêtre.

13. Dispositif selon la revendication 12, caractérisé en ce que les moyens (32) pour recevoir une plaquette à la fois comportent une fente de réception d'une plaquette avec un jeu longitudinal et des moyens élastiques de butée prévus pour céder sous l'action desdites mâchoires.

**Claims**

1. A device for inserting air pin springs (15A, 15B) having two legs astride a plate (11) having windows for welding the legs one against the other locally across the window, comprising means (32) for receiving one plate at a time, for moving it lengthwise, for bringing it in successive positions each corresponding to the arrival of one of spring reception zones in an insertion position, means (103, 104, 94, 96) for centering and temporarily holding the plate in said successive positions and means (54) for guiding said springs to a take up position, characterized in that it comprises a gripper (58) for gripping each spring in turn by the end of one of its legs, associated to means (60, 62) for moving the gripper in a plane perpendicular to the plate maintained in vertical position by reception means (32), along an introducing path of the other legs of the spring onto the plate.

2. Device according to claim 1, characterized in that it comprises electric welding clamping means (66) associated with said centering and insertion means (103, 104, 94, 96) and arranged for acting on the spring while the corresponding reception zone is in the insertion position.

3. Device according to claim 2, characterized in that said welding clamping means (66) are provided so as to weld the legs of the spring together only through a single one of two windows.

4. Device according to anyone of claims 1 to 3, characterized in that the means for moving the plates comprise a supplying path (34) having belts (40) for driving modules each carrying a plate (11) and means (107, 74) for advancing the modules with respect to the centering and holding means by steps equal to the distance between two spring receiving zones.

5. Device according to claim 4, characterized in that the means for moving the plates further comprise a return path (36) for bringing back the modules carrying the plates having springs to a position close to their starting point and a transfer mechanism (38) for transferring one at a time a module from the return path to a starting zone of the supplying path (34).

6. Device according to claim 4 or 5, characterized in that each module (32) comprises a slot for receiving the lower part of a plate (11) and carrying retractable studs spaced apart at a same pitch as the spring reception zones.

7. Device according to anyone of the preceeding claims, characterized in that the spring guiding means comprise shears (48) for cutting springs, a gripper (52) for bringing successive springs onto a vibrating rail (54) guiding the springs to a take up position and a separator for raising one spring at a time, placed astride the vibrating rail, to a position where it is taken up by the spring insertion gripper (58).

8. Device according to anyone of the preceeding claims, characterized in that the spring insertion gripper (58) is provided with actuating cylinders (60, 62) for raising one spring (15A, 15B) at a time up to a higher level to the insertion position in the plate (11), then moving it horizontally and finally leaving it for insertion.

9. Device according to claim 8, characterized in that the actuating cylinders (60, 62) and insertion gripper (58) are associated with control means giving to the gripper a different path depending on whether the spring is to be inserted in an indentation (14) in the upper edge of the plate or fitted through a window formed in the plate.

10. Device according to claim 9, characterized in that it comprises a removable wedge (106) placed so as to come into abutment against the top part of the spring (15B) when they are brought by the insertion gripper (58) and to give thereto a slant required for introducing them through the window (19) of the plate.

11. Device according to claim 1 or 2, characterized in that the means for moving the plates are associated with second welding means (68), for welding the two legs of the spring one to the other through the second window, eventually associated to centering means.

12. Device according to claim 11, characterized in that said centering means comprise two forks (140, 141) movable between an aside position and a close position for which each fork encompasses one leg of the spring and index it about the weld already performed for mutual alignment of the legs on both sides of the second window.

13. Device according to claim 12, characterized in that the means (32) for receiving one plate at a time comprise a receiving slot for receiving a plate with a longitudinal clearance and abutment resilient means arranged for yielding under the action of said forks.

**Patentansprüche**

1. Vorrichtung zum Einsetzen von Haarnadelfedern (15A, 15B) mit zwei Schenkeln rittlings auf eine Platte (11), die mit Fenstern versehen ist, die erlauben, örtlich einen Schenkel mit dem anderen zu verschweissen, welche Einrichtungen (32), um jeweils eine Platte aufzunehmen, um sie in Längsrichtung zu verschieben, und um sie an aufeinanderfolgende Positionen heranzuführen, die jede der Ankunft einer der Zonen zur Aufnahme einer Feder an einer Einsatzstelle entsprechen, Einrichtungen (103, 104, 94, 96) zum Zentrieren und einstweiligen Festhalten der Platte in den genannten aufeinanderfolgenden Positionen und Einrichtungen (54) zur Führung der Federn in Richtung auf eine Greifstelle umfasst, dadurch gekennzeichnet, dass sie einen Greifer (58) umfasst, der so beschaffen ist, dass er jede Feder jeweils am Ende eines ihrer Schenkel ergreift, und der mit Einrichtungen (60, 62) zum Verschieben des Greifers in einer Ebene senkrecht zur Platte, die durch die Einrichtungen zur Aufnahme (32) in vertikaler Stellung gehalten wird, entlang eines Weges zur Einbringung des anderen Schenkels der Feder auf die Platte verbunden ist.

2. Vorrichtung gemäss Anspruch 1, dadurch gekennzeichnet, dass sie Einrichtungen zum Elektroschweissen mit einer Zange (66) umfasst, die mit den Einrichtungen zum Zentrieren und Einsetzen (103, 104, 94, 96) verbunden und so beschaffen sind, dass sie auf die Feder einwirken, während sich die entsprechende Aufnahmezone an der Einsatzstelle befindet.

3. Vorrichtung nach Anspruch 2, dadurch gekennzeichnet, dass die Einrichtungen zum Schweissen mit einer Zange (66) so beschaffen sind, dass sie die Schenkel der Feder nur durch eines der beiden Fenster hindurch verschweissen.

4. Vorrichtung nach irgendeinem der Ansprüche 1 bis 3, dadurch gekennzeichnet, dass die Einrichtungen zur Bewegung der Platten eine Zuführungsstrecke (34) mit Riemen (40) zum Antrieb von Modulen, die jeweils eine Platte (11) tragen, und Einrichtungen (107, 74) zum Vorrücken des Moduls bezüglich der Einrichtungen zum Zentrieren und Festhalten in Schritten, die dem Abstand zwischen zwei mit einer Feder zu versehenden Zonen entsprechen, umfassen.

5. Vorrichtung nach Anspruch 4, dadurch gekennzeichnet, dass die Einrichtungen zum Verschieben der Platten darüberhinaus eine Rückführungsstrecke (36), um die Module, die die mit Federn ausgerüsteten Platten tragen, in Richtung auf eine Stelle nahe dem Ausgangspunkt zurückzuführen, und einen Transfermechanismus (38), um jeweils ein Modul von der Rückführungsstrecke in eine Abgangszone der Zuführungsstrecke (34) übertreten zu lassen, umfassen.

6. Vorrichtung nach Anspruch 4 oder 5, dadurch gekennzeichnet, dass jedes Modul (32) einen Schlitz zur Aufnahme des unteren Teils der Platte (11) und einziehbare Stifte, die im selben Abstand wie die Zonen zur Aufnahme der Federn verteilt sind, umfasst.

7. Vorrichtung nach irgendeinem der vorhergehenden Ansprüche, dadurch gekennzeichnet, dass die Einrichtungen zur Führung der Federn eine Schere (48) zum Abschneiden der Federn, einen Greifer (52) zur Zuführung der aufeinanderfolgenden Federn auf eine vibrierende Schiene (54) zur Führung der Federn in Richtung auf eine Greifstelle und eine Trennanlage zum Anheben jeweils einer Feder, die rittlings auf der vibrierenden Schiene angeordnet ist, bis zu einer Stelle, an der sie von dem Greifer (58) zum Einsetzen der Feder ergriffen wird, umfasst.

8. Vorrichtung nach irgeneinem der vorhergehenden Ansprüche, dadurch gekennzeichnet, dass der Greifer (58) zum Einsetzen der Federn mit Antriebszylindern ausgestattet ist, die ihm erlauben, jeweils eine Federn (15A, 15B) auf ein oberes Niveau zur Stelle des Einsetzens auf der Platte (11) zu heben, sie dann horizontal zu Verschieben, und schliesslich loszulassen, um sie an ihren Platz einzuführen.

9. Vorrichtung nach Anspruch 8, dadurch gekennzeichnet, dass die Antriebszylinder (60, 62) und der Greifer (58) zum Einsetzen mit Steuereinrichtungen Verbunden sind, die dem Greifer einen Unterschiedlichen Weg geben, je nachdem, ob die Feder in einer Aussparung (14) der Oberkante der Platte eingesetzt, oder durch ein in der Platte ausgespartes Fenster (19) hindurch eingeführt werden soll.

10. Vorrichtung nach Anspruch 9, dadurch gekennzeichnet, dass sie einen beweglichen Keil (106) umfasst, der so angeordnet ist, dass er gegen den oberen Teil der Feder (15B) bei deren Zuführung durch den Einsetzgreifen (58) im Anschlag kommt, und ihr die Neigung verleiht, die für ihre Einführung in das Fenster (19) der Platte nötig ist.

11. Vorrichtung nach Anspruch 1 oder 2, dadurch gekennzeichnet, dass die Einrichtungen zum Verschieben der Platten mit zweiten Einrichtungen zum Schweissen (68) verbunden sind, die dazu bestimmt sind, die beiden Schenkel der Feder durch das zweite Fenster hindurch miteinander zu verschweissen, und die gegebenenfalls mit Einrichtungen zum Zentrieren verbunden sind.

12. Vorrichtung nach Anspruch 11, dadurch gekennzeichnet, dass die genannten Einrichtungen zum Zentrieren zwei Klauen (140, 141) umfassen, die zwischen einer entfernten Stellung und einer angenäherten Stellung, in der jede Klaue einen Schenkel der Feder umfasst, und ihn um die schon bewirkte Schweißstelle herum ausrichtet, um die Schenkel beidseitig des zweiten Fensters in eine gerade Linie zu bringen, verschiebbar sind.

13. Vorrichtung nach Anspruch 12, dadurch gekennzeichnet, dass die Einrichtungen (32) zur Aufnahme jeweils einer Platte einen Aufnahmeschlitz für eine Platte mit Spiel in Längsrichtung und federnde Anschläge, die so beschaffen sind, dass sie unter Einwirkung der genannten Klauen nachgeben, umfassen.

0 163 568

FIG.1.

FIG.3A.   FIG.3B.   FIG.2.

1

FIG. 4.

FIG. 5.

0 163 568

FIG.6A.

FIG. 6B.

FIG. 8.

FIG.7.

0 163 568

**0 163 568**

FIG.9.

FIG.10.

FIG.11.

FIG.12.